## Europäisches Patentamt
## European Patent Office
## Office européen des brevets

(19)

(11) Veröffentlichungsnummer: **0 211 274**
**B1**

(12) # EUROPÄISCHE PATENTSCHRIFT

(45) Veröffentlichungstag der Patentschrift:
02.11.88

(21) Anmeldenummer: 86109540.4

(22) Anmeldetag: 11.07.86

(51) Int. Cl.⁴: **F 16 L 13/10,** F 16 L 39/00,
F 16 L 47/02

(54) **Verfahren und Vorrichtung zur Herstellung einer flüssigkeits- und gasdichten Verbindung zwischen Kunststoffrohren und Verbindungsstücken.**

(30) Priorität: 31.07.85 DE 3527440

(43) Veröffentlichungstag der Anmeldung:
25.02.87 Patentblatt 87/9

(45) Bekanntmachung des Hinweises auf die Patenterteilung:
02.11.88 Patentblatt 88/44

(84) Benannte Vertragsstaaten:
AT BE CH GB IT LI NL SE

(56) Entgegenhaltungen:
AT-B-346 140
FR-A-1 516 389

(73) Patentinhaber: Aviplast B.V., Wheedwarsweg 4, NL-7471 GG Goor (NL)

(72) Erfinder: van Dijk, Dick, Wheedwarsweg 4, NL-7471 GG Goor (NL)

(74) Vertreter: Habbel, Hans- Georg, Dipl.- Ing.,
Postfach 3429 Am Kanonengraben 11, D-4400
Münster (DE)

## Beschreibung

Die Erfindung bezieht sich auf ein Verfahren gemäß dem Oberbegriff des Hauptanspruches und auf eine Vorrichtung gemäß dem Oberbegriff des Anspruches 6.

Kunststoffrohre, die eine Metallarmierung aufweisen, sind heute in großem Umfang im Installationsbereich bekannt. Unabhängig davon, daß diese Metallarmierung u.a. die Aufgabe hat, eine Gasundurchlässigkeit des Rohres herbeizuführen, hat die Metallarmierung auch vielfach die Aufgabe, derartige aus thermoplastischen Kunststoffen bestehende Kunststoffrohre auch zur Führung von warmen Medien einsatzfähig zu machen. Der hohe Ausdehnungskoeffizient des eingesetzten Kunststoffmaterials wird durch die Metallarmierung aufgefangen und so können beispielsweise solche Rohre auch für Warm- und Heißwasserleitungen im Installationsbereich in Gebäuden eingesetzt werden.

Schwierigkeiten bestehen bei den bekannten Anordnungen darin, derartige Kunststoffrohre aneinander anzuschließen, da die Anschlußmittel üblicherweise aus Metall bestehen. Hierbei kann es auftreten, daß durch Kontakt des flüssigen Mediums mit den beiden Metallen, nämlich dem Metall des Verbinders und dem Metall der Armierung, elektrische Elemente entstehen, die zu einer raschen Korrosison insbesondere der Metallarmierung führen.

Da die metallischen Verbinder über einen Formschluß an den Kunststoffrohren, und zwar an der Außenseite des Kunststoffrohres anschließen, besteht auch hier vielfach die Gefahr, daß aufgrund der Fließeigenschaften des thermoplastischen Kunststoffes, rasch eine Undichtigkeit der Verbindung herbeigeführt wird.

Diese Schwierigkeiten haben dazu geführt, daß derartige Kunststoffrohre im Trinkwasserbereich, insbesondere dann, wenn sie im Erdboden verlegt werden sollen, nicht eingesetzt werden durften.

Der Erfindung liegt die Aufgabe zugrunde, ein Verfahren zu schaffen, mit dem der Einsatz aus Kunststoff bestehender Verbindungsstücke ermöglicht wird, wobei die Gefahr von Korrosionen im Bereich der in der Verbindungsstelle offenliegenden Metallarmierung ausgeschaltet werden.

Diese der Erfindung zugrundeliegende Aufgabe wird durch die Lehre des Hauptanspruches gelöst.

Eine Verbindung der erfindungsgemäßen Art wird in den Unteransprüchen unter Schutz gestellt.

Mit anderen Worten ausgedrückt, schlägt die Erfindung vor, das Kunststoffrohr auf seinem Endbereich, mit dem es mit einem aus Kunststoff bestehenden Verbindungsstück zusammengebracht werden soll, hinsichtlich des Kunststoffaußenmantels und hinsichtlich der Metallarmierung abzuschälen, so daß der Kunststoffinnenmantel freigelegt wird. Es wird somit ein Endteil des Rohres geschaffen, das metallarmierungslos ist.

Dieses Kunststoffende wird nunmehr in die Öffnung des Verbindungsstückes eingeschoben und hier materialschlüssig mit der Wandung des Verbindungsstückes verbunden, wobei die materialschlüssige Verbindung entweder durch Verschweißen mittels Wärme oder durch Verschweißen über einen entsprechenden, Lösungsmittel enthaltenden Kleber erfolgen kann.

Das Verbindungsstück kann ebenfalls mit einer Metallarmierung ausgerüstet sein, kann aber auch, da es aus dickerem Kunststoff besteht und nicht mehr biegefähig sein muß, auch aus reinem Kunststoffmaterial gefertigt werden.

Durch die erfindungsgemäße Verfahrensweise und Anordnung liegt die freigelegte Stirnkante der Metallarmierung stumpf vor der aus Kunststoff bestehenden Stirnkante des Verbindungsstückes an und die freigelegte Stirnkante des Kunststoffaußenmantels liegt ebenfalls vor der Stirnkante des Verbindungsstückes an und ist hier materialschlüssig mit dem Verbindungsstück verbunden, so daß keinerlei Kontakt der Metallarmierung mit dem im Inneren des Rohres geführten Medium erfolgen kann. Eine Diffusionsdichtigkeit wird in diesem Bereich durch die wesentlich stärkere Kunststoffschicht erreicht, so daß in diesem Bereich die Metallarmierung nicht mehr erforderlich ist.

Das Abschälen des Kunststoffaußenmantels und der Netallarmierung kann über entsprechende Werkzeuge von Hand erfolgen, beispielsweise in Art der bekannten Abisoliermesser aus der Elektrotechnik oder durch kleine maschinelle Einrichtungen, die ohne Schwierigkeiten auf der Baustelle eingesetzt werden können und beispielsweise in Art eines Bleistiftanspitzers arbeiten.

Im Stand der Technik sind auch Schweißgeräte bekannt, mit denen Verbindungsstücke mit Kunststoffrohren über Wärme miteinander verschweißt werden können, wobei diese Schweißgeräte als Handgeräte ausgebildet sind und somit von jedem Installateur an der Baustelle eingesetzt werden können.

Vorteilhafte Ausgestaltungen der Erfindung sind in den Unteransprüchen erläutert.

Ein Ausführungsbeispiel der Erfindung wird nachfolgend anhand der Zeichnung beschrieben. Die Zeichnung zeigt dabei in

| | |
|---|---|
| Fig. 1 | ein Verbindungsstück mit einem anzuschließenden Kunststoffrohr, in |
| Fig. 2 | eine Darstellung gemäß Fig. 1, wobei aber am Verbindungsende des Kunststoffrohres der Kunststoffaußenmantel und die Metallarmierung abgefräst sind und in |
| Fig. 3 | in einer Schnittdarstellung die ineinandergesetzten Bauteile nach Durchführen der materialschlüssigen Verbindung. |

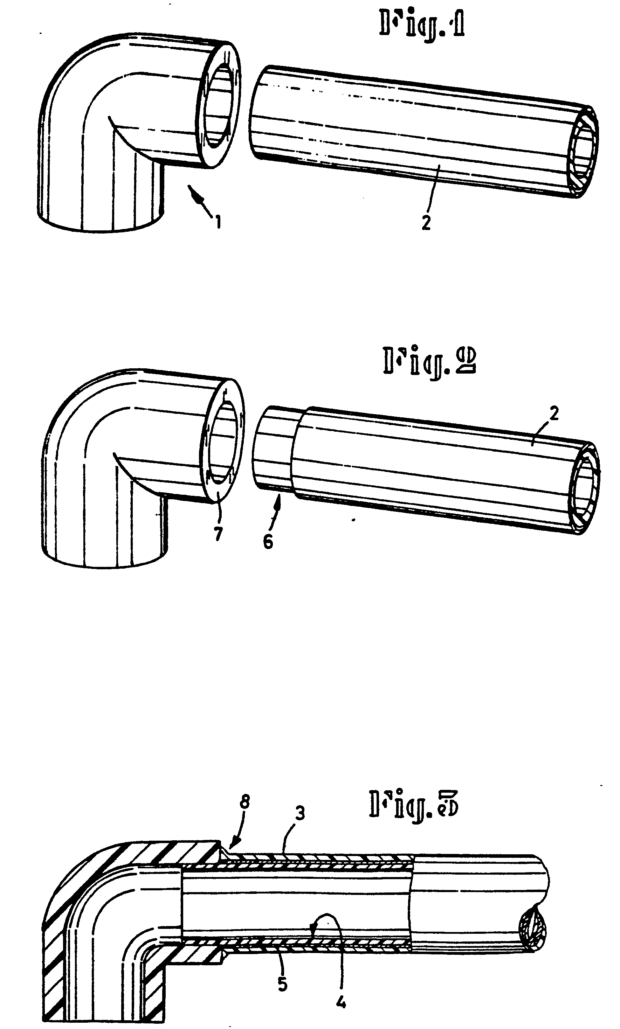

In Fig. 1 ist mit 1 ein Verbindungsstück bezeichnet, das aus Kunststoff besteht und - wie Fig. 3 zeigt - ganz aus Kunststoff gebildet sein kann, also nicht zwingend eine Metallarmierung aufweisen muß, aber es ist durchaus im Rahmen der Erfindung liegend, daß auch das Verbindungsstück 1 eine Metallarmierung aufweist.

Mit 2 ist ein Kunststoffrohr bezeichnet, das - wie die Schnittdarstellung in Fig. 3 zeigt - einen Kunststoffaußenmantel 3 und einen Kunststoffinnen mantel 4 aufweist, wobei der Außenmantel vom Innenmantel durch eine Metallarmierung 5 getrennt ist. Die Metallarmierung dient dabei sowohl der Festigkeit des Rohres als auch der Undurchlässigkeit gegenüber gasförmigen und flüssigen Medien.

Um die in Fig. 1 dargestellten beiden Bauteile, nämlich das Verbindungsstück 1 und das Kunststoffrohr 2, korrosionssicher aneinander anzuschließen, wird - wie Fig. 2 zeigt - das Verbindungsende 6 des Kunststoffrohres 2 abgeschält, d. h. der Kunststoffaußenmantel 3 und die Metallarmierung 5 werden bis auf die Außenseite des Kunststoffinnenmantels 4 abgetrennt. Damit liegt an der Oberseite des Verbindungsendes 6 der vorzugsweise aus Polypropylen bestehende Innenmantel frei.

Dieser freiliegende Kunststoffinnenmantel kann nunmehr materialschlüssig mit der Innenwandung des Verbindungsstückes 1 verbunden werden, entweder durch Verschweißen mittels Wärme oder durch chemisches Verschweißen, indem ein Kleber oder nur ein Lösungsmittel eingeführt wird, das die Kunststofflächen anlöst und nach Entfernen und Verdunsten des Lösemittels miteinander sicher verschweißt.

Vorzugsweise wird das Anlösen, insbesondere des Kunststoffinnenmantels entweder durch Wärme oder durch ein Lösemittel vor Einführen des Verbindungsendes 6 in das Verbindungsstück 1 vorgenommen, so daß sich etwas Kunststoffmaterial vor den Stirnflächen des Verbindungsstückes 1 herschiebt und damit den in Fig. 3 erkennbaren Wulst 8 schafft, der eine sichere materialschlüssige Verbindung zwischen dem Außenmantel 3, dem Innenmantel 4 und der Stirnfläche 7 des Verbindungsstückes 1 schafft.

Nach Erhärten der Verbindung, stellt diese eine gas- und flüssigkeitsdichte Verbindung dar, die weder ein Eindiffundieren von Schadstoffen von außen noch ein Diffundieren der im Rohr geführten Medien nach außen möglich macht. Zusätzlich wird in einwandfreier Weise die freiliegende Stirnfläche der Metallarmierung gegen von außen und innen wirkende Gase oder flüssige Medien geschützt.

## Patentansprüche

1. Verfahren zum Herstellen einer gas- und flüssigkeitsdichten Verbindung zwischen einem mit einer Metallarmierung versehenen Kunststoffrohr und einem Kunststoffverbindungsstück, wobei zumindest das Kunststoffrohr aus einem Kunststoffinnenmantel, einem diesen umgebenden Metallmantel und einem den Metallmantel nach außen abdeckenden Kunststoffaußenmantel besteht, dadurch gekennzeichnet, daß auf dem Verbindungsbereich des Kunststoffrohres der Kunststoffaußenmantel und die Metallarmierung abgetrennt werden, der verbleibende Kunststoffinnenmantel in die rohrförmige Öffnung des Verbindungsstückes eingeführt und eine materialschlüssige Verbindung z. B. durch Verschweißung des Verbindungsstückes mit dem Kunststoffinnenmantel und dem Kunststoffaußenmantel herbeigeführt wird.

2. Verfahren nach Anspruch 1, dadurch gekennzeichnet, daß die materialschlüssige Verbindung im eingesetzten Zustand des Kunststoffrohres in das Verbindungsstück erfolgt.

3. Verfahren nach Anspruch 1 und 2, dadurch gekennzeichnet, daß die materialschlüssige Verbindung zwischen dem Verbindungsstück und dem Kunststoffrohr durch Wärmeeinwirkung erfolgt.

4. Verfahren nach Anspruch 1 und 2, dadurch gekennzeichnet, daß die materialschlüssige Verbindung durch ein Lösemittel erfolgt, das zu einer materialschlüssigen Verbindung zwischen den verschiedenen ineinandergesesetzten Bauteilen führt.

5. Verfahren nach Anspruch 1, 3 und 4, dadurch gekennzeichnet, daß vor Einsetzen des Kunststoffrohres in das Verbindungsstück das Verbindungsstück und das freigelegte Ende des Kunststoffrohres angeschmolzen und im erweichten Zustand ineinandergeschoben werden.

6. Verbindung zwischen einem eine Metallarmierung zwischen einem Kunststoffinnenmantel und einem Kunststoffaußenmantel aufweisenden Kunststoffrohr mit einem aus Kunststoff bestehenden Verbindungsstück, gekennzeichnet durch eine materialschlüssige Verbindung der Außenseite des Kunststoffinnenmantels (4) des Kunststoffrohres (2) mit dem Innenumfang des Verbindungsstückes (7) und eine materialschlüssige Verbindung des Kunststoffaußenmantels (3) des Kunststoffrohres (2) mit den Stirnflächen (7) des Verbindungsstückes (1).

7. Vorrichtung nach Anspruch 6, dadurch gekennzeichnet, daß die materialschlüssige Verbindung zwischen dem Kunststoffinnenmantel (4) und dem Kunststoffaußenmantel (3) mit dem Verbindungsstück (1) durch einen Kleber erfolgt.

8. Vorrichtung wenigstens nach Anspruch 6, dadurch gekennzeichnet, daß die materialschlüssige Verbindung zwischen dem Kunststoffinnenmantel (4) und dem Kunststoffaußenmantel (3) des Kunststoffrohres (2) mit dem Verbindungsstück (1) durch Wärmeeinwirkung erfolgt.

## Claims

1. Process for the production of a gas-tight and liquid-tight connection between a plastics pipe provided with a metal reinforcement and a plastics jointing piece, at least the plastics pipe consisting of a plastics inner sheath, a metal casing surrounding the latter and a plastics outer sheath covering the metal casing on the outside, characterized in that over the connecting area of the plastics pipe, the plastics outer sheath and the metal reinforcement are separated, the remaining plastics inner sheath is introduced into the tubular opening of the jointing piece and a fused connection brought about, for example by welding of the jointing piece to the plastics inner sheath and the plastics outer sheath.

2. Process according to Claim 1, characterized in that the fused connection takes place in the inserted state of the plastics pipe into the jointing piece.

3. Process according to Claims 1 and 2, characterized in that the fused connection between the jointing piece and the plastics pipe takes place by the action of heat.

4. Process according to Claims 1 and 2, characterized in that the fused connection takes place by a solvent, which leads to a fused connection between the various mutually inserted components.

5. Process according to Claims 1, 3 and 4, characterized in that before insertion of the plastics pipe into the jointing piece, the jointing piece and the bared end of the plastics pipe are melted slightly and pushed into each other in the softened state.

6. Connection between a plastics pipe having a metal reinforcement between a plastics inner sheath and a plastics outer sheath with a jointing piece consisting of plastic, characterized by a fused connection of the outside of the plastics inner sheath (4) of the plastics pipe (2) with the inner circumference of the jointing piece (7) and a fused connection of the plastics outer sheath (3) of the plastics pipe (2) with the end faces (7) of the jointing piece (1).

7. Device according to Claim 6, characterized in that the fused connection between the plastics inner sheath (4) and the plastics outer sheath (3) with the jointing piece (1) takes place by an adhesive.

8. Device according at least to Claim 6, characterized in that the fused connection between the plastics inner sheath (4) and the plastics outer sheath (3) of the plastics pipe (2) with the jointing piece (1) takes place by the action of heat.

## Revendications

1. Procédé pour l'établissement d'un raccord étanche aux gaz et aux liquides entre un tube en matière plastique pouru d'une armature en métal et une pièce de raccordement en une matière plastique, conformément auquel au moins le tube en matière plastique se compose d'une chemise interne en une matière plastique, d'une chemise de métal enveloppant la chemise précitée et d'une chemise externe en une matière plastique recouvrant à l'extérieur la chemise de métal, caractérisé en ce que l'on sépare la chemise externe en matière plastique et l'armature de métal dans la zone de raccordement du tube en matière plastique, on introduit la chemise interne en matière plastique qui subsiste dans l'ouverture tubulaire de la pièce de raccordement et on établit une liaison obturatrice par soudure de la pièce de raccordement avec la chemise interne en matière plastique et la chemise externe en matière plastique.

2. Procédé suivant la revendication 1, caractérisé en ce que la liaison obturatrice s'effectue cependant que le tube en matière plastique se trouve à l'état introduit dans la pièce de raccordement.

3. Procédé suivant les revendications 1 et 2, caractérisé en ce que la liaison obturatrice entre la piece de raccordement et le tube en matière plastique s'effectue sous l'action de la chaleur.

4. Procédé suivant les revendications 1 et 2, caractérisé en ce que la liaison obturatrice s'effectue à l'aide d'un solvant qui entraîne la formation de la liaison obturatrice entre les divers éléments constitutifs insérés l'un dans l'autre.

5. Procédé suivant les revendications 1, 3 et 4, caractérisé en ce qu'avant l'introduction du tube en matière plastique dans la pièce de raccordement, on amène la pièce de raccordement et l'extrémité dégagée du tube en matière plastique à fondre et on les introduit l'un dans l'autre à l'état ramolli.

6. Raccordement d'un tube en matière plastique présentant une armature de métal entre une chemise interne en matière plastique et une chemise externe en matière plastique et une pièce de raccordement se composant d'une matière plastique, caractérisé par une liaison obturatrice du côté externe de la chemise interne en matière plastique (4) du tube de matière plastique (2) avec la périphérie interne de la pièce de raccordement (7) et une liaison obturatrice de la chemise externe en matière plastique (3) du tube en matière plastique (2) avec la surface frontale (7) de la pièce de raccordement (1).

7. Dispositif suivant la revendication 6, caractérisé en ce que la liaison obturatrice entre la chemise interne en matière plastique (4) et la chemise externe en matière plastique (3) et la pièce de raccordement (1) s'effectue à l'aide d'une colle.

8. Dispositif au moins suivant la revendication 6, caractérisé en ce que la liaison obturatrice entre la chemise interne en matière plastique (4) et la chemise externe en matière plastique (3) du tube en matière plastique (2) et la pièce de raccordement (1) s'effectue sous l'action de la chaleur.

0 211 274

**Fig. 1**

**Fig. 2**

**Fig. 3**